# EUROPÄISCHE PATENTSCHRIFT

(11) **EP 2 983 494 B1**
(45) Veröffentlichungstag und Bekanntmachung des Hinweises auf die Patenterteilung: **28.11.2018**
(21) Anmeldenummer: 14720505.8
(22) Anmeldetag: 09.04.2014
(51) Int. Cl.: A23K 20/147, A23K 20/142, A23K 20/158, A23K 20/163, A23K 50/48

(54) **FLÜSSIGES TIERFUTTER FÜR HAUSKATZEN ODER HUNDE UND VERFAHREN ZU SEINER HERSTELLUNG**
LIQUID ANIMAL FEED FOR DOMESTIC CATS OR FOR DOGS AND METHOD FOR PRODUCING SAID LIQUID ANIMAL FEED
ALIMENT LIQUIDE POUR CHATS OU CHIENS DE COMPAGNIE ET PROCÉDÉ POUR LE FABRIQUER

(30) Priorität: 09.04.2013 DE 102013103541
(43) Veröffentlichungstag der Anmeldung: 17.02.2016
(73) Patentinhaber: Growth Finance Plus AG, 8737 Gommiswald (CH)
(72) Erfinder: DEUERER, Hans-Jürgen, 75015 Bretten (DE)
(74) Vertreter: Twelmeier Mommer & Partner
(86) Internationale Anmeldenummer: PCT/EP2014/057211
(87) Internationale Veröffentlichungsnummer: WO 2014/167029

(56) Entgegenhaltungen:
- EP-A1- 0 241 097
- EP-A1- 1 527 699
- WO-A1-89/10066
- WO-A1-2009/029893
- WO-A1-2010/114627
- US-A- 5 792 501
- US-A1- 2004 037 942
- US-A1- 2009 311 197

## Beschreibung

Die Erfindung betrifft ein flüssiges Tierfutter für Hauskatzen oder Hunde auf Milchbasis. Ein Tierfutter mit den im Oberbegriff des Anspruchs 1 angegebenen Merkmalen ist aus EP 0 241 097 A1 bekannt. Aus der WO 2010/114627 ist ein ähnliches Tierfutter bekannt. Zudem ist aus der US 5 792 501 A ein flüssiges Tierfutter als Milchaustauscher für Katzenjunge bekannt.
Als Ergänzungsfutter ist für Hauskatzen flüssiges Tierfutter auf Milchbasis bekannt. Derartiges Tierfutter wird im Handel als Katzenmilch bezeichnet und wird in der Regel aus laktosereduzierter Kuhmilch hergestellt, der Vitamine zugesetzt sind. Aufgabe der vorliegenden Erfindung ist es, ein flüssiges Tierfutter für Hauskatzen zu schaffen, das sich leicht verabreichen lässt, von Katzen gerne angenommen wird und bekömmlich ist.
Diese Aufgabe wird durch ein Tierfutter mit den im Anspruch 1 angegebenen Merkmalen sowie durch ein Herstellungsverfahren gemäß Anspruch 13 gelöst. Vorteilhafte Weiterbildungen der Erfindung sind Gegenstand von Unteransprüchen.

Ein erfindungsgemäßes Tierfutter wird auf Basis von Milch, bevorzugt Kuhmilch, hergestellt und enthält wenigstens 70 Vol.-% Wasser, 2 Vol.-% bis 13 Vol.-% Milchproteine und 2 Vol.-% bis 13 Vol.-% Milchfett. Bevorzugt enthält das Tierfutter 6 Vol.-% bis Vol.-% bis 13 Vol.-% Milchfett. Bevorzugt enthält das Tierfutter 2 Vol.-% bis 6 Vol.-% Milchproteine.

Trotz seines hohen Wasseranteils von wenigstens 70 Vol.-% ist erfindungsgemäßes Tierfutter zähflüssig, da es 1 bis 5 Vol.-% Stärke als Verdickungsmittel, beispielsweise Maisstärke, Guarkernmehl, Caragene, Xanthan oder Johanisbrotkernmehl. Zähflüssiges Katzenfutter lässt sich wesentlich leichter verabreichen als herkömmliche Milch, da es beim Füttern nicht so leicht verspritzt oder verkleckert wird. Das zähflüssige Tierfutter ist bevorzugt in Beuteln, beispielsweise Schlauchbeuteln und Vier Rand Siegelbeuten verpackt. Auf diese Weise lassen sich auch kleine Portionen von beispielsweise 5 g bis 15 g kostengünstig verpacken und problemlos verabreichen.

Stärke als Verdickungsmittel kann Hydrokolloide bilden, die zu einem thixotropen Verhalten der Flüssigkeit führen. Thixotrope Flüssigkeiten haben eine zunächst hohe Viskosität, die sich unter Krafteinwirkung reduziert. Thixotropes Tierfutter lässt sich aus Beuteln problemlos entnehmen, da sich die Viskosität des Tierfutters durch Druck auf den Beutel reduziert und dieses somit aus einem aufgerissenen Beutel gut heraus fließen kann. In einem Futternapf erhöht sich die Viskosität wegen der Thixotropie der Flüssigkeit, so dass es nur geringe Neigung hat, aus dem Napf auszulaufen.

Erfindungsgemäßem Tierfutter sind wenigstens 0,01 Vol.-% Aminosäuren zugesetzt, beispielsweise Methionin, bevorzugt DL-Methionin, Glyzein und/oder Cystein, bevorzugt L-Cystein. Durch Zumischen von Aminosäuren lässt sich der Geschmack verbessern. Zudem können so Ernährungsdefizite ausgeglichen werden. Bevorzugt enthält das Tierfutter 0,01 Vol.-% bis 0,5 Vol.-% Aminosäuren, besonders bevorzugt 0,01 Vol.-% bis 0,1 Vol.-% Aminosäuren.

Zu Geschmacksverbesserung enthält erfindungsgemäßes Tierfutter wenigstens 0,01 Vol.-% pflanzlichen Zucker, beispielsweise Xylose oder Dextrose.

Eine vorteilhafte Weiterbildung sieht vor, dass das Tierfutter höchstens 2 Vol.-% Lactose, bevorzugt höchstens 1 Vol.-% Lactose, beispielsweise nicht mehr als 0,5 Vol.-% Lactose enthält. Lactose ist für Katzen unverträglich. Bevorzugt wird erfindungsgemäßes Tierfutter deshalb auf Basis von lactosereduzierter Milch hergestellt.

Eine weitere vorteilhafte Weiterbildung der Erfindung sieht vor, dass das Tierfutter wenigstens 0,1 Vol.-% pflanzliche Fasern zur Verdauungsförderung enthält. Bevorzugt enthält das Tierfutter wenigstens 0,5 Vol.-% pflanzliche Fasern zur Verdauungsförderung. Durch Zugabe von Pflanzenfasern als Ballaststoffe kann die gesundheitsfördernde Wirkung des Tierfutters weiter verbessert werden. Beispielsweise kann das Tierfutter 0,5 Vol.-% bis 2 Vol.-% Psylliumfasern enthalten. Psyllium wird auch als Plantago ovata oder Flohsamen bezeichnet. Alternativ oder zusätzlich kann das Tierfutter 0,1 Vol.-% bis 3 Vol.-% Inulinfasern enthalten. Als Ballaststoff enthält das erfindungsgemäße Tierfutter Lignozellulosefasern wenigstens 0,5 Vol.-% Lignozellulosefasern. Beispielsweise kann das Tierfutter 1 Vol.-% bis 6 Vol.-% Lignozellulosefasern enthalten.

Erfindungsgemäß ist vorgesehen, dass das Tierfutter wenigstens 1 Vol.-% Malz enthält. Das Tierfutter kann beispielsweise bis zu 15 Vol.-% Malz. Malz ist bekömmlich und verbessert den Geschmack.

Zusätzlich können dem Tierfutter Vitamine, Mineralstoffe und/oder Aminosäurenderivate, beispielsweise Taurin, beigemischt werden.

Erfindungsgemäßes Tierfutter ist insbesondere als Ergänzungsfutter zu Tierfutter auf Fleischbasis, beispielsweise Nassfutter, geeignet. Ein Aspekt der Erfindung betrifft deshalb ein Paket mit ersten Beuteln, die ein erfindungsgemäßes Tierfutter enthalten, und mit ebenso vielen zweiten Beuteln, die ein zweites Tierfutter auf Basis von Fleisch enthalten. Erfindungsgemäßes Tierfutter kann beispielsweise als Nachtisch zu herkömmlichem Tierfutter auf Fleischbasis gefüttert werden, insbesondere zur Verdauungsförderung.

Das erfindungsgemäße Paket kann im einfachsten Fall aus einem einzigen Beutel mit erfindungsgemäßem Futter auf Milchbasis und einem einzigen Beutel mit Futter auf Fleischbasis bestehen. Das erfindungsgemäße Paket kann aber auch eine größere Anzahl von ersten und zweiten Beuteln enthalten, beispielsweise zwei bis zehn erste Beutel und ebenso viele zweite Beutel.

Die Beutel können ein Paket bilden, indem sie von einer gemeinsamen Umverpackung umgeben sind. Beispielsweise können die Beutel eines erfindungsgemäßen Pakets zusammen in Kunststofffolie eingeschweißt sein und/oder in einem Karton verpackt werden. Durch Kauf eines Erfindungsgemäßen Pakets erhält ein Kunde eine oder mehrere Malzeiten für seine Katze, die jeweils aus einer Portion Futter auf Fleischbasis und einer Portion erfindungsgemäßem Futter auf Milchbasis bestehen.

Bevorzugt enthalten die ersten Beutel jeweils 5 g bis 15 g Tierfutter und die zweiten Beutel jeweils 50 g bis 80 g Tierfutter. Der Hauptgang einer solchen Katzenmalzeit ist also Nassfutter auf Basis von Fleisch und der Nachtisch erfindungsgemäßes Tierfutter auf Milchbasis. Die Beutel können beispielsweise aus metallbeschichteter Kunststofffolie hergestellt werden.

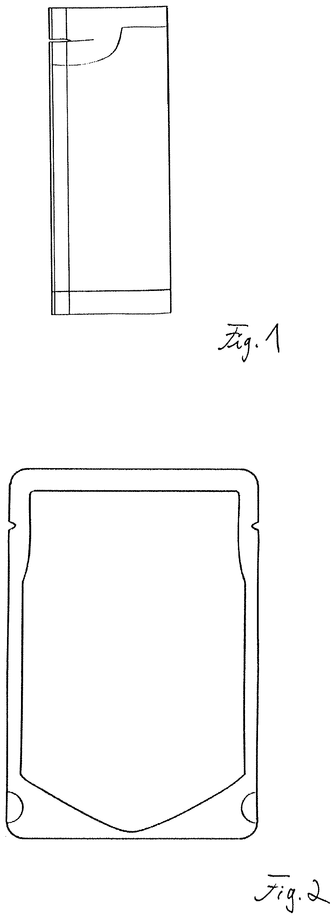

Die ersten Beutel können beispielsweise als Schlauchbeutel und die zweiten Beutel als Standbeutel ausgebildet sein. Fig. 1 zeigt ein Ausführungsbeispiel eines Schlauchbeutels mit erfindungsgemäßem Tierfutter auf Milchbasis. Fig. 2 zeigt ein Ausführungsbeispiel eines Standbeutels mit Tierfutter auf Fleischbasis.

Ein Standbeutel hat zwei Seitenwände, die an ihren Längsrändern und an einem oberen Rand mit einander verbunden, beispielsweise verklebt oder verschweißt sind. An ihrem unteren Rand sind die beiden Seitenwände mit einem Boden verklebt oder verschweißt. Bei einem Schlauchbeutel fehlt ein solcher Boden. Die Seitenwände sind also umlaufend direkt miteinander verbunden.

Bei einem erfindungsgemäßen Verfahren zur Herstellung eines erfindungsgemäßen Tierfutters für Hauskatzen wird Milchpulver mit Wasser vermischt und Aminosäuren, pflanzlicher Zucker und Stärke zugemischt werden, sodass sich eine Mischung mit einem Wassergehalt von wenigstens 70 Vol.-%, einem Milchproteingehalt von 2 bis 13 Vol.-%, einem Milchfettgehalt von 2 bis 13 Vol.-%, einem Aminosäurengehalt von wenigstens 0,01 Vol.-%, einem pflanzlichen Zuckergehalt von wenigstens 0,01 Vol.-% und einem Stärkegehalt von 1 bis 5 Volumen % ergibt. Zusätzlich werden Pflanzenfasern, Malz und andere Zusätze wie vorstehend beschrieben beigemischt. Die Mischung wird dann in einem Beutel versiegelt und danach durch Erhitzen auf eine Temperatur wenigstens 100 °C sterilisiert. So lässt sich ein Tierfutter herstellen, das ungeöffnet zwei Jahre haltbar ist.
Eine vorteilhafte Weiterbildung der Erfindung sieht vor, dass das Tierfutter in dem Beutel auf eine Temperatur von wenigstens 105 °C erhitzt wird. Bevorzugt wird das Tierfutter in dem Beutel auf eine Temperatur von wenigstens 120 °C erhitzt. Bevorzugt wird das Tierfutter nicht über 140 °C aufgeheizt. Beispielsweise kann das Tierfutter bei einer Temperatur von 120 °C bis 130 °C sterilisiert werden.
Eine weitere vorteilhafte Weiterbildung der Erfindung sieht vor, dass das Tierfutter in dem Beutel wenigstens 5 Minuten lang bei einer Temperatur von über 100°C gekocht wird. Dadurch wird das Tierfutter nicht nur sterilisiert, sondern auch eine vorteilhafte Konsistenz erreicht, da die als Verdickungsmittel beigefügte Stärke dabei Hydrokolloide bildet. Bevorzugt wird das Tierfutter in dem Beutel wenigstens 10 Minuten, besonderes bevorzugt wenigstens 15 Minuten, lang bei einer Temperatur von wenigstens 100°C gekocht. Kochzeiten von mehr als 30 Minuten sind nicht mit besonderen Vorteilen verbunden. Für eine effiziente und energiesparende Herstellung sind deshalb Kochzeiten von weniger als 30 Minuten, beispielsweise weniger als 25 Minuten, bevorzugt. Beim Kochen wird das Tierfutter bevorzugt auf einer Temperatur von wenigstens 105 °C, beispielsweise wenigstens 120 °C gehalten.
Eine weitere vorteilhafte Weiterbildung der Erfindung sieht vor, dass das Tierfutter in dem Beutel bei einem Druck von wenigstens 1,5 bar gekocht wird, beispielsweise bei einem Druck von mehr als 2,5 bar. Ein Druck von mehr als 4,5 bar bringt keine besonderen Vorteile. Für eine effiziente und energiesparende Herstellung ist deshalb ein Druck von weniger als 4,5 bar, beispielsweise weniger als 3,5 bar bevorzugt.

## Patentansprüche

1. Flüssiges Tierfutter für Hauskatzen oder Hunde auf Milchbasis, enthaltend wenigstens 70 Vol.-% Wasser,
2 - 13 Vol.-% Milchproteine,
1 - 5 Vol.-% Stärke als Verdickungsmittel,
wenigstens 0,01 Vol.-% Aminosäurenzusatz, und
wenigstens 0,01 Vol.-% pflanzlichem Zucker,
**dadurch gekennzeichnet, dass**
es 2 - 13 Vol.-% Milchfett,
wenigstens 0,5 Vol.-% Lignozellulosefasern, und
wenigstens 1 Vol.-% Malz enthält.

2. Flüssiges Tierfutter nach Anspruch 1, **dadurch gekennzeichnet, dass** als Aminosäurenzusatz wenigstens 0,01 Vol.-% Cystein, Glycin und/oder Methionin zugesetzt sind.

3. Flüssiges Tierfutter nach einem der vorstehenden Ansprüche, **dadurch gekennzeichnet, dass** als pflanzlicher Zucker wenigstens 0,01 Vol.-% Dextrose zugesetzt sind.

4. Flüssiges Tierfutter nach einem der vorstehenden Ansprüche, **dadurch gekennzeichnet, dass** es thixotrop ist.

5. Flüssiges Tierfutter nach einem der vorstehenden Ansprüche, **dadurch gekennzeichnet, dass** es wenigstens 0,1 Vol.-%, vorzugsweise wenigstens 0,5 Vol.-% pflanzliche Fasern enthält.

6. Flüssiges Tierfutter nach einem der vorstehenden Ansprüche, **dadurch gekennzeichnet, dass** es 0,5 bis 3 Vol.-% Psylliumfasern enthält.

7. Flüssiges Tierfutter nach einem der vorstehenden Ansprüche, **dadurch gekennzeichnet, dass** es 0,1 bis 3 Vol.-% Inulinfasern enthält.

8. Flüssiges Tierfutter nach einem der vorstehenden Ansprüche, **dadurch gekennzeichnet, dass** es 1 bis 6 Vol.-% Lignozellulosefasern enthält.

9. Flüssiges Tierfutter nach einem der vorstehenden Ansprüche, **dadurch gekennzeichnet, dass** es steril in einem Beutel, vorzugsweise in einem Schlauchbeutel oder Vier Rand Siegelbeutel, verpackt ist.

10. Paket mit einem oder mehreren ersten Beuteln, die ein erstes Tierfutter nach einem der Ansprüche 1 bis 9 enthalten, und mit ebenso vielen zweiten Beuteln, die ein zweites Tierfutter auf Basis von Fleisch enthalten.

11. Paket nach Anspruch 10, **dadurch gekennzeichnet, dass** das erste Tierfutter in Schlauchbeuteln oder Vier Rand Siegelbeuteln und das zweite Tierfutter in Standbeuteln verpackt ist.

12. Paket nach Anspruch 10 oder 11, **dadurch gekennzeichnet, dass** die ersten Beutel jeweils 5 g bis 15 g Tierfutter enthalten und die zweiten Beutel jeweils 50 g bis 80 g Tierfutter enthalten.

13. Verfahren zum Herstellen eines flüssigen Tierfutters nach Anspruch 9, wobei Milchpulver mit Wasser vermischt und Aminosäuren, pflanzlicher Zucker und Stärke zugemischt werden, sodass sich eine Mischung mit einem Wassergehalt von wenigstens 70 Vol.-%, einem Milchproteingehalt von 2 bis 13 Vol.-%, einem Milchfettgehalt von 2 bis 13 Vol.-%, einem Aminosäurengehalt von wenigstens 0,01 Vol.-%, einem pflanzlichen Zuckergehalt von wenigstens 0,01 Vol.-%, einem Stärkegehalt von 1 bis 5 Volumen %, wenigstens 0,5 Vol.-% Lignozellulosefasern und wenigstens 1 Vol.-% Malz ergibt, und
die Mischung in einem Beutel versiegelt und danach durch Erhitzen bei einer Temperatur von wenigstens 100 °C sterilisiert wird.

14. Verfahren nach Anspruch 13, **dadurch gekennzeichnet, dass** das Tierfutter wenigstens 5 Minuten lang bei einer Temperatur von über 100°C gekocht wird.

15. Verfahren nach einem der Anspruch 13 oder 14, **dadurch gekennzeichnet, dass** das Tierfutter in dem Schlauchbeutel bei einem Druck von wenigstens 1,5 bar auf über 100°C erhitzt wird.

## Claims

1. A liquid, milk-based animal feed for domestic cats or dogs, comprising at least 70 vol% water,
2 to 13 vol% milk protein,
1 to 5 vol% starch as thickener,
at least 0.01 vol% amino acid additive, and
at least 0.01 vol% plant-based sugar,
**characterized in that** it comprises
2 to 13 vol% milk fat,
at least 0.5 vol% lignocellulose fiber, and
at least 1 vol% malt.

2. Liquid animal feed according to Claim 1, **characterized in that** at least 0.01 vol% cysteine, glycine and/or methionine is added as the amino acid additive.

3. Liquid animal feed according to any one of the preceding claims, **characterized in that** at least 0.01 vol% dextrose is added as the plant-based sugar.

4. Liquid animal feed according to any one of the preceding claims, **characterized in that** it is thixotropic.

5. Liquid animal feed according to any one of the preceding claims, **characterized in that** it comprises at least 0.1 vol%, preferably at least 0.5 vol% plant-based fiber.

6. Liquid animal feed according to any one of the preceding claims, **characterized in that** it comprises 0.5 to 3 vol% psyllium fiber.

7. Liquid animal feed according to any one of the preceding claims, **characterized in that** it comprises 0.1 to 3 vol% inulin fiber.

8. Liquid animal feed according to any one of the preceding claims, **characterized in that** it comprises 1 to 6 vol% lignocellulose fiber.

9. Liquid animal feed according to any one of the preceding claims, **characterized in that** it is packaged in a bag, preferably in a tubular bag or a four-edged sealed bag under sterile conditions.

10. A package comprising one or more first bags, which each contain a first animal feed according to any one of claims 1 to 9, and an equal number of second bags, which contain a second animal feed based on meat.

11. The package according to Claim 10, **characterized in that** the first animal feed is packaged in tubular bags or in four-edge sealed bags, and the second animal feed is packaged in stand-up pouches.

12. The package according to Claim 10 or 11, **characterized in that** the first bags each contain 5 g to 15 g animal feed and the second bags each contain 50 g to 80 g animal feed.

13. The method for producing a liquid animal feed according to Claim 9, wherein powdered milk is mixed with water and amino acids, plant-based sugar and starch are added, so that a mixture with a water content of at least 70 vol%, a milk protein content of 2 to 13 vol%, a milk fat content of 2 to 13 vol%, an amino acid content of at least 0.01 vol%, a plant-based sugar content of at least 0.01 vol% and a starch content of 1 to 5 vol% is obtained, and
the mixture is sealed in a bag and then sterilized by heating at a temperature of at least 100 °C.

14. The method according to Claim 13, **characterized in that** the animal feed is boiled for at least 5 minutes at a temperature of more than 100 °C.

15. The method according to any one of Claims 13 or 14, **characterized in that** the animal feed is heated in the tubular bag to more than 100 °C at a pressure of at least 1.5 bar.

## Revendications

1. Aliment animal liquide à base de lait pour des chats domestiques ou des chien, contenant
au moins 70 % en volume d'eau,
2 à 13 % en volume de protéines de lait,
1 à 5 % en volume d'amidon en tant qu'épaississant,
au moins 0,01 % en volume d'acides aminés ajoutés, et
au moins 0,01 % en volume de sucre végétal,
**caractérisée en ce qu'**il contient
2 à 13 % en volume de matières grasses de lait,
au moins 0,5 % en volume de fibres lignocellulosiques, et
au moins 1 % en volume de malt.

2. Aliment animal liquide selon la revendication 1, **caractérisée en ce que** l'on ajoute, en tant qu'acides aminés ajoutés, au moins 0,01 % en volume de cystéine, glycine et/ou méthionine.

3. Aliment animal liquide selon l'une des revendications précédentes, **caractérisée en ce que** l'on ajoute, en tant que sucre végétal, au moins 0,01 % en volume de dextrose.

4. Aliment animal liquide selon l'une des revendications précédentes, **caractérisée en ce qu'**il est thixotrope.

5. Aliment animal liquide selon l'une des revendications précédentes, **caractérisée en ce qu'**il contient au moins 0,1 % en volume, de préférence au moins 0,5 % en volume, de fibres végétales.

6. Aliment animal liquide selon l'une des revendications précédentes, **caractérisée en ce qu'**il contient 0,5 à 3 % en volume de fibres de psyllium.

7. Aliment animal liquide selon l'une des revendications précédentes, **caractérisée en ce qu'**il contient 0,1 à 3 % en volume de fibres d'inuline.

8. Aliment animal liquide selon l'une des revendications précédentes, **caractérisée en ce qu'**il contient 1 à 6 % en volume de fibres lignocellulosiques.

9. Aliment animal liquide selon l'une des revendications précédentes, **caractérisée en ce qu'**il est conditionné stérilement dans un sachet, préférentiellement dans un sachet tubulaire ou un sachet scellé sur ses quatre bords.

10. Paquet comportant un ou plusieurs premiers sachets contenant un premier aliment animal selon l'une des revendications 1 à 9, et un même nombre de deuxièmes sachets contenant un deuxième aliment animal à base de viande.

11. Paquet selon la revendication 10, **caractérisé en ce que** le premier aliment animal est emballé dans des sachets tubulaires ou des sachets scellés sur leurs quatre bords et le deuxième aliment animal est emballé dans des sachets à fond plat.

12. Paquet selon les revendications 10 ou 11, **caractérisé en ce que** les premiers sachets contiennent chacun 5 g à 15 g d'aliment animal et les deuxièmes sachets contiennent chacun 50 g à 80 g d'aliment animal.

13. Procédé de fabrication d'un aliment animal liquide selon la revendication 9, consistant à mélanger du lait en poudre avec de l'eau, pour ensuite y mélanger des acides aminés, du sucre végétal et de l'amidon, de manière à obtenir un mélange ayant une teneur en eau d'au moins 70 % en volume, une teneur en protéines de lait comprise entre 2 et 13 % en volume, une teneur en matières grasses de lait comprise entre 2 et 13 % en volumen, une teneur en acides aminés d'au moins 0,01 % en volume, une teneur en sucre végétal d'au moins 0,01 % en volume, une teneur en amidon comprise entre 1 et 5 % en volume, et comportant au moins 0,5 % en volume de fibres lignocellulosiques et au moins 1 % en volume de malt, et
à sceller ledit mélange dans un sachet pour ensuite le stériliser en chauffant à une température d'au moins 100 °C.

14. Procédé selon la revendication 13, **caractérisé en ce que** ledit aliment animal est cuite durant au moins 5 minutes à une température supérieure à 100 °C.

15. Procédé selon l'une des revendications 13 ou 14, **caractérisé en ce que** ledit aliment animal est chauffée dans ledit sachet tubulaire à une pression d'au moins 1,5 barde manière à atteindre plus de 100 °C.
